# EUROPÄISCHE PATENTANMELDUNG

(11) **EP 0 770 567 A1**
(43) Veröffentlichungstag der Anmeldung: **02.05.1997**
(21) Anmeldenummer: 96113425.1
(22) Anmeldetag: 21.08.1996
(51) Int. Cl.: B65G 47/90, B65G 57/26

(54) **Verschiebegreifer**

(30) Priorität: 23.10.1995 DE 19539376
(71) Anmelder: KRUPP POLYSIUS AG, 59269 Beckum (DE)
(72) Erfinder: Golz, Hans-Joachim, Dipl.-Ing., 59229 Ahlen (DE); Grachtrup, Heinz, Dipl.-Ing., 59320 Ennigerloh (DE); Westermeyer, Gisbert, Dipl.-Ing., 48301 Nottuln (DE)
(74) Vertreter: Tetzner, Volkmar, Dr.-Ing. Dr. jur.

(57) **Zusammenfassung**

Die Erfindung betrifft einen Verschiebegreifer, insbesondere zum stapelweise Aufnehmen einer Vielzahl von Steinrohlingen, enthaltend eine Vielzahl von Greifern (1), die in Greif- bzw. Preßreihen (2, 3) angeordnet sind, wenigstens eine erste Verstelleinrichtung (4) zum Einstellen des Abstands zwischen einzelnen Greifreihen (2) sowie wenigstens eine zweite Verstelleinrichtung (5) zum Einstellen des Abstands zwischen einzelnen Preßreihen (3), wobei die erste Verstelleinrichtung mit den Greifreihen bzw. die zweite Verstelleinrichtung mit den Preßreihen derart über ein Hebelsystem gekoppelt ist, daß die Abstände zwischen den Greif- bzw. Preßreihen synchron und stufenlos veränderbar sind.

## Beschreibung

Die Erfindung betrifft einen Verschiebegreifer, insbesondere zum stapelweisen Aufnehmen einer Vielzahl von Steinrohlingen, gemäß dem Oberbegriff des Anspruches 1.

Verschiebegreifer für Pressen, wie beispielsweise Bausteinpressen, haben die Aufgabe, die Steinrohlinge stapelweise aufzunehmen und beispielsweise auf einem Härtewagen oder einer Palette zu stapeln.

Die aus der Praxis bekannten Verschiebegreifer bestehen im wesentlichen aus einer Vielzahl von Greifern, die in mehreren Greif- bzw. Preßreihen angeordnet sind, einer ersten Verstelleinrichtung zum Einstellen des Abstandes zwischen einzelnen Greifreihen sowie einer zweiten Verstelleinrichtung zum Einstellen des Abstandes zwischen einzelnen Preßreihen.

Die von der Presse kommenden Steinrohlinge weisen einen bestimmten Abstand voneinander auf, der durch die Kastenplattendicke des Formwerkzeuges vorgegeben ist. In vielen Fällen muß jedoch der Abstand der Steinrohlinge verkleinert werden, um ein Stapeln auf dein Härtewagen oder der Palette zu ermöglichen. Hierzu muß der Abstand zwischen den einzelnen Preß- bzw. Greifreihen verändert werden. Bei den bekannten Verschiebegreifern sind zu diesem Zweck Distanzbolzen oder Distanzkämme vorgesehen, die die Greifreihen bzw. Preßreihen in bestimmten Abständen nach Art einer Kette miteinander verbinden und so den Anschlag für den gegenseitigen Kleinst- und Größtabstand der Greif- bzw. Preßreihen zueinander vorgeben.

Bei Änderungen des Steinformats sind an den bekannten Verschiebegreifern zeitraubende Umrüstarbeiten notwendig, die zudem technisch versiertes Personal erfordern, welches die Arbeiten anhand von speziellen Unterlagen durchführen muß. So müssen beispielsweise die Distanzbolzen mit Hilfe von speziellen Einstellvorlagen an die neuen Abstände angepaßt werden.

Der Erfindung liegt daher die Aufgabe zugrunde, den Verschiebegreifer gemäß dem Oberbegriff des Anspruches 1 dahingehend weiterzuentwickeln, daß die Einstellarbeiten insbesondere beim Umrüsten auf ein anderes Steinformat wesentlich vereinfacht werden.

Erfindungsgemäß wird diese Aufgabe durch die kennzeichnenden Merkmale des Anspruches 1 gelöst.

Weitere Ausgestaltungen der Erfindung sind Gegenstand der Unteransprüche.

Erfindungsgemäß ist die erste Verstelleinrichtung mit den Greifreihen bzw. die zweite Verstelleinrichtung mit den Preßreihen über ein Hebelsystem derart gekoppelt, daß die Abstände zwischen den Greif- bzw. Preßreihen synchron und stufenlos veränderbar sind. In einer besonderen Ausgestaltung der Erfindung weist die erste bzw. zweite Verstelleinrichtung ein erstes bzw. zweites Stellglied sowie ein mit dem Stellglied zusammenwirkendes erstes bzw. zweites Hebelsystem auf. Dadurch wird ein stufenloses Verstellen der Abstände zwischen den Reihen ermöglicht. Die Einstellung des Verschiebegreifers auf ein bestimmtes Steinformat kann auf einfache Weise dadurch erfolgen, daß der Verschiebegreifer unmittelbar über den aufzunehmenden Steinrohlingen durch Betätigung der Stellglieder optisch eingestellt wird.

Weitere Vorteile und Ausgestaltungen der Erfindung werden anhand der Beschreibung einiger Ausführungsbeispiele und der Zeichnung näher erläutert.

In der Zeichnung zeigen
- Fig.1: eine Aufsicht eines Verschiebegreifers gemäß einem ersten erfindungsgemäßen Ausführungsbeispiel,
- Fig.2: eine Seitenansicht des Verschiebegreifers gemäß Fig.1,
- Fig.3: eine Schnittdarstellung längs der Linie III-III der Fig.2,
- Fig.4: eine Seitenansicht der zweiten Verstelleinrichtung gemäß einem zweiten Ausführungsbeispiel,
- Fig.5a und 5b: Aufsichten der zweiten Verstelleinrichtung gemäß Fig.4 in zwei verschiedenen Stellungen,
- Fig.6a und 6b: Aufsichten der ersten Verstelleinrichtung gemäß Fig.1 in zwei verschiedenen Stellungen,
- Fig.7a bis 7c: Ansichten einer Greifklappe in drei verschiedenen Stadien der Montage.

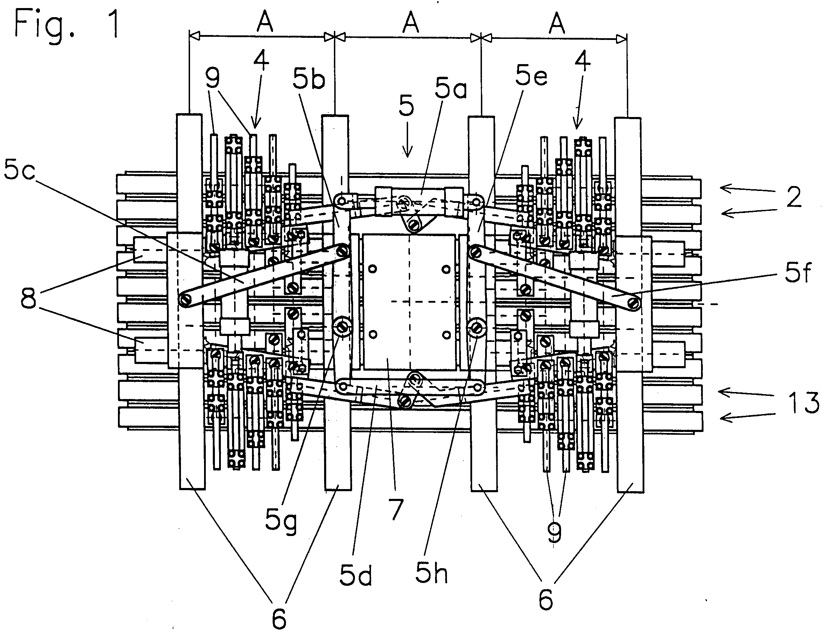

Der in den Fig.1 bis 3 dargestellte Verschiebegreifer ist insbesondere zur stapelweisen Aufnahme einer Viel-zahl von Steinrohlingen ausgebildet. Er enthält im wesentlichen eine Vielzahl von Greifern 1, die in mehreren Greifreihen 2 bzw. Preßreihen 3 angeordnet sind, eine erste Verstelleinrichtung 4 zum Einstellen des Abstandes zwischen einzelnen Greifreihen 2 sowie eine zweite Verstelleinrichtung 5 zum Einstellen eines Abstandes zwischen einzelnen Preßreihen 3. Alle Greifreihen 2 sind senkrecht zu den Preßreihen 3 angeordnet, wobei die Greifreihen bzw. Preßreihen untereinander parallel ausgerichtet sind.

Im dargestellten Ausführungsbeispiel ist der Verschiebegreifer mit 40 Greifern 1 versehen, die in vier Preßreihen 3 und zehn Greifreihen 2 angeordnet sind. Alle Greifer einer Preßreihe 3 sind an einem Querträger 6 verschiebbar angeordnet, wobei der Querträger zur Führung der Greifer eine Aussparung, insbesondere eine T-Nut 6a, aufweist. Jeder Greifer 1 ist mit einem entsprechend T-förmig ausgebildeten und in der Nut 6a verschiebbaren Halteelement 1e versehen.

Zwischen den mittleren beiden Querträgern ist ein zentraler Tragkörper 7 vorgesehen, der mit zwei parallel zueinander und mit Abstand voneinander angeordneten Längsträgern 8 verbunden ist. Die Querträger 6 sind in Richtung der Längsträger 8 an diesen gleitverschieblich gehaltert. Im dargestellten Ausführungsbeispiel sind die Längsträger zu diesem Zweck als Rundkörper ausgebildet, während die Querträger einen rechteckigen Querschnitt aufweisen. Die Querträger 6 sind ferner mit je zwei Durchgangsbohrungen versehen, durch die sich die beiden Längsträger erstrecken, so daß die Querträger 6 auf den Längsträgern 8 verschiebbar sind.

Im folgenden wird anhand der Fig.1 zunächst die zweite Verstelleinrichtung 5 näher dargestellt, durch die der Abstand zwischen den einzelnen Preßreihen 2 verändert werden kann. Nachdem die Greifer 1 einer Preßreihe 3 an den Querträgern 6 gehaltert sind, kann eine Veränderung des Abstandes zwischen den Preßreihen durch eine entsprechende Verschiebung der Querträger 6 entlang der Längsträger 8 erfolgen.

Die zweite Verstelleinrichtung 5 weist zu diesem Zweck ein zweites Stellglied 5a sowie ein aus mehreren Hebeln 5b bis f bestehendes zweites Hebelsystem auf. Das zweite Stellglied 5a wird zweckmäßigerweise durch eine Zylinder-Kolbenanordnung, insbesondere einen Pneumatikzylinder gebildet. An den beiden Enden des zweiten Stellglieds 5a greifen zwei Hebel 5b, 5e an, deren beiden Drehpunkte 5g und 5h fest mit den beiden innenliegenden Querträgern 6 verbunden sind. Die beiden dem Stellglied 5a gegenüberliegenden Enden der beiden Hebel 5b, 5e sind mit einer Querstange 5d verbunden, deren Länge etwa dem minimalen Abstand der beiden mittleren Querträger 6 entspricht.

Bei einer Betätigung des zweiten Stellgliedes 5a im Sinne einer Hubvergrößerung werden die beiden Hebel 5b, 5e um ihre Drehpunkte 5g, 5h nach außen gedreht. Durch die starre Verbindung über die Querstange 5d am anderen Ende der beiden Hebel 5d, 5e vergrößert sich der Abstand A zwischen den beiden mittleren Querträgern 6 entsprechend den Hebelarmverhältnissen.

Um die gleiche Abstandsvergrößerung auch zwischen den mittleren und den jeweils äußeren Querträgern zu gewährleisten, sind mit den Hebeln 5b, 5e die Hebel 5c bzw. 5f mit ihrem einen Ende drehfest gekoppelt. Das andere Ende ist jeweils gelenkig an den äußeren Querträgern festgelegt. Der Hebel 5c ist in bezug auf den Drehpunkt 5g derart am Hebel 5b angelenkt, daß sich der Abstand zwischen den beiden mittleren Querträgern bzw. zwischen dem mittleren und dem jeweils äußeren Querträger synchron und stufenlos verändert, wobei der Abstand A zwischen den Querträgern 6 auch während des Verstellvorganges zu jeder Zeit gleich groß ist.

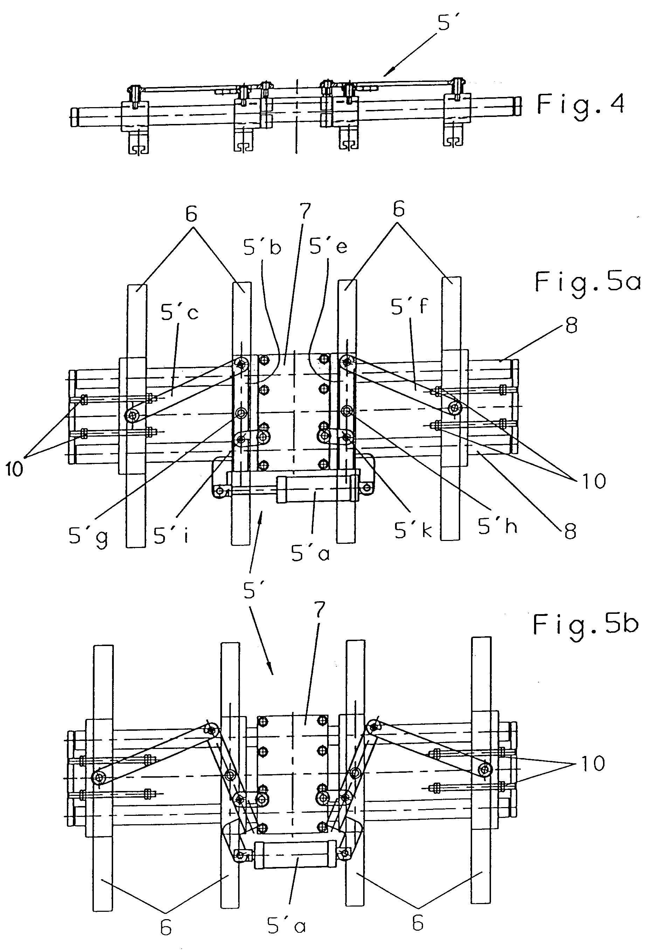

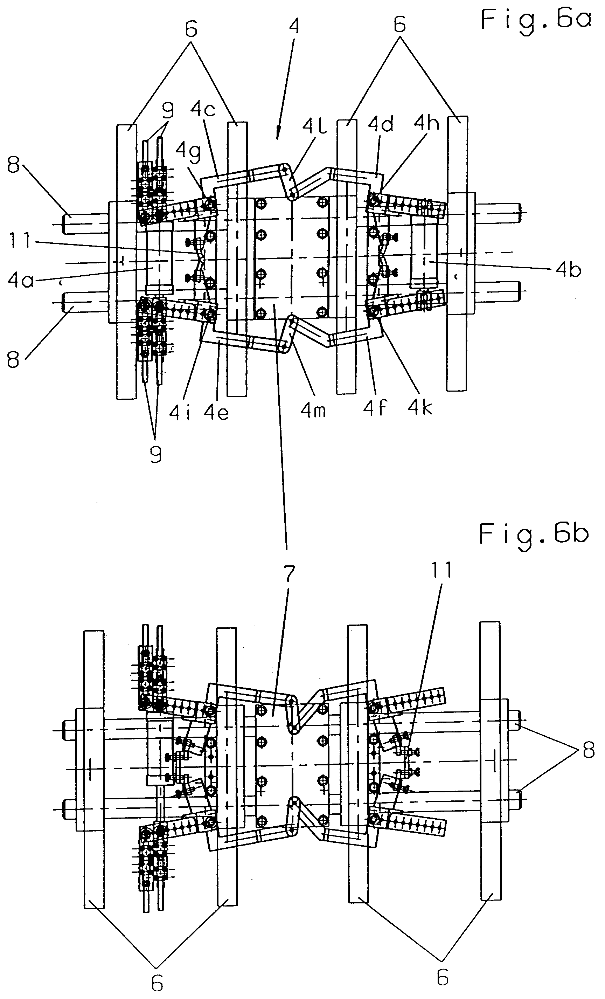

Die Fig.4 und 5a, 5b zeigen ein zweites Ausführungsbeispiel für die zweite Verstelleinrichtung 5'. Auch bei diesem Ausführungsbeispiel ist ein Stellglied 5'a vorgesehen, das mit einem Hebelsystem zusammenwirkt, das aus Hebeln 5'b, 5'c, 5'i und 5'e, 5'f, 5'k besteht. Die beiden mit den Enden des Stellgliedes 5'a verbundenen Hebel 5'b, 5'e sind wiederum an ihren Drehpunkten 5'g, 5'h mit den beiden mittleren Querträgern 6 gekoppelt. An den beiden anderen Enden dieser Hebel sind die beiden Hebel 5'c bzw. 5'f gelenkig angebunden, die wiederum mit den beiden äußeren Querträgern in Verbindung stehen. Die beiden Hebel 5'b und 5'e sind zudem zwischen ihren Drehpunkten und den Verbindungsstellen mit dem Stellglied über kurze Hebel 5'i und 5'k gelenkig mit dem zentralen Tragkörper 7 verbunden. Durch eine geeignete Wahl der Hebellängen ist auch bei diesem Ausführungsbeispiel gewährleistet, daß sich bei Betätigung des Stellgliedes 5'a die Abstände zwischen den einzelnen Querträgern gleichförmig, synchron und stufenlos verstellen lassen.

Dieses zweite Ausführungsbeispiel zeichnet sich durch einen vergleichsweise großen Einstellbereich bei vergleichsweise kleinem Hub des Stellgliedes aus.

Wie die beiden dargestellten Ausführungsbeispiele der zweiten Verstelleinrichtung 5, 5' zeigen, sind mit dem erfindungsgemäßen Hebelsystem die verschiedensten Ausführungsbeispiele denkbar, um eine synchrone und stufenlose Veränderung der Abstände benachbarter Preßreihen zu gewährleisten.

In den Fig. 6a und 6b ist die erste Verstelleinrichtung 4 dargestellt, wie sie auch bereits in Fig.1 aufgezeigt ist. Zum einfacheren Verständnis der Wirkungsweise wurden jedoch in den Fig.6a und 6b alle übrigen Bauteile, insbesondere die zweite Verstelleinrichtung 5 nicht dargestellt.

Die erste Verstelleinrichtung 4 dient zur Veränderung des Abstandes zwischen den in Fig.1 dargestellten 10 Greifreihen 2. Diese erste Verstelleinrichtung 4 besteht im wesentlichen aus zwei Stellgliedern 4a, 4b und einem aus vier Hebeln 4c-4f bestehenden Hebelsystem. Jeder Hebel 4c bis 4f ist um einen Drehpunkt 4g bis 4k gelenkig gehaltert. Die beiden Hebel 4c und 4d bzw. 4e und 4f sind im wesentlichen in Richtung der Längsträger 8 angeordnet und an jeweils einem Ende über ein kurzes Verbindungsstück 4l und 4m miteinander verbunden. Die auf diese Weise gebildeten zwei Hebelteilsysteme sind an den freien Hebelenden über die Stellglieder 4a und 4b miteinander verbunden. Aus den beiden in Fig.6a und 6b dargestellten unterschiedlichen Endstellungen ist die Bewegung der Hebel bei Betätigung der Stellglieder ersichtlich. Mit den Hebeln 4c bis 4f sind im Bereich zwischen den Drehpunkten und den Angriffspunkten der Stellglieder ferner Schubstangen 9 gelenkig angebunden, die jeweils mit den einzelnen Greifreihen 2 gekoppelt sind.

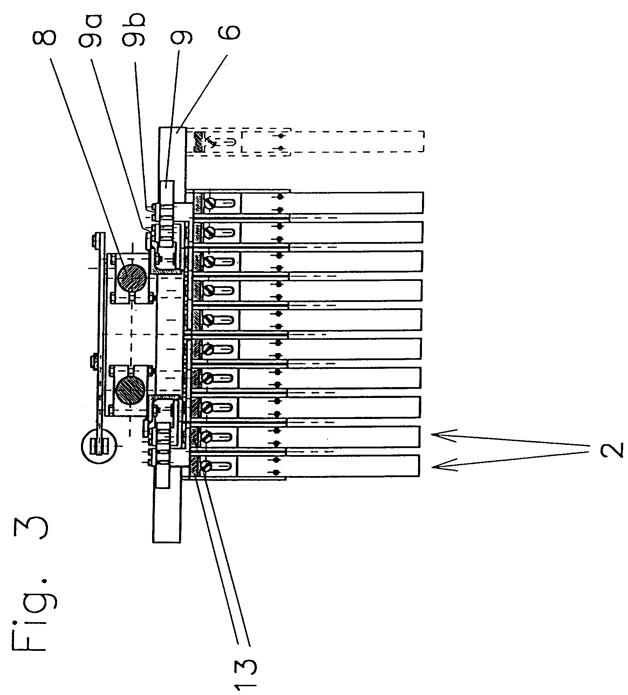

Während in der Fig.1 alle Schubstangen dargestellt sind, sind in den Fig.6a und 6b der Übersichtlichkeit halber lediglich vier Schubstangen 9 dargestellt. In Fig.3 sind an jeder Schubstange zwei Schubstangenschellen 9a, 9b vorgesehen, wobei die eine Schubstangenschelle 9a die Verbindung zum Hebel und die andere Schubstangenschelle die Verbindung zur zugehörigen Greifreihe 2 herstellt.

Um eine möglichst paralle Verschiebung der einzelnen Greifreihen 2 zu ermöglichen, ist jede Greifreihe 2 an zwei Stellen über die Schubstangen mit den aus den Hebeln 4c und 4d oder 4e und 4f bestehenden Hebelteilsystem verbunden.

Alle Greifer 1 einer Greifreihe 2 sind zudem untereinander über ein Führungselement 13 derart verbunden, daß sie längs dieses Führungselementes 13 verschiebbar sind, um eine Vergrößerung des Preßreihenabstandes zu ermöglichen. Das Führungselement 13 ist vorzugsweise als durchgehende Führungsleiste ausgebildet.

Da in jeder Verschiebungsstellung der Greifreihen 2 der Abstand zwischen zwei benachbarten Greifreihen gleich groß ist, müssen zwangsläufig die äußeren Greifreihen 2 einen wesentlich größeren Verschiebungsweg zurücklegen als die weiter innen liegenden Greifreihen. Diese Vorgabe wird beim erfindungsgemäßen Hebelsystem auf einfache Weise dadurch gelößt, daß die äußerste Schubstange, d.h. die Schubstange, die am weitesten vom Drehpunkt eines Hebels entfernt ist mit der äußersten Greifreihe verbunden wird und dementsprechend die dein Drehpunkt am nächsten liegende Schubstange mit der innersten Greifreihe gekoppelt wird.

Das aus den Hebeln 4c und 4d bestehende Hebelteilsystem ist somit für die Verschiebung der fünf Greifreihen auf einer Seite des Verschiebegreifers in eine Richtung und das aus den Hebeln 5e und 5f gebildete Hebelteilsystem für die Verschiebung der fünf Greifreihen auf der gegenüberliegenden Seite in entgegengesetzter Richtung zuständig (siehe Fig.1).

Im Rahmen der Erfindung sind selbstverständlich auch Verstelleinrichtungen für die Greifreihen denkbar, die lediglich ein Stellglied benötigen. So könnte beispielsweise auf die beiden äußeren Stellglieder 4a und 4c verzichtet werden, wenn ein entsprechend dimensioniertes Stellglied zwischen den Verbindungsstücken 4l und 4m angeordnet wird.

Je nach Art der für die erste und zweite Verstelleinrichtung 4, 5 verwendeten Stellglieder sind möglicherweise Hubbegrenzungselemente für den maximalen bzw. minimalen Abstand der Greif- bzw. Preßreihen vorzusehen. In den Fig.5a und 5b sind für die zweite Verstelleinrichtung 5' Hubbegrenzungselemente 10 an den äußeren Enden der Längsträger 8 vorgesehen. Diese Hubbegrenzungselemente 10 können beispielsweise als Spindelschrauben ausgebildet sein, die mit einem an den Längsträgern 8 vorhandenen Außengewinde zusammenwirken, um längs diesem verstellt zu werden.

In den Fig.6a, 6b sind entsprechende Hubbegrenzungselemente 11 für die erste Verstelleinrichtung 4 vorgesehen, die hier unmittelbar mit dem Hebelsystem, d.h. mit den Hebeln 4c, 4d, 4e, 4f verbunden sind und dadurch die Bewegungsfreiheit der Hebel einschränken.

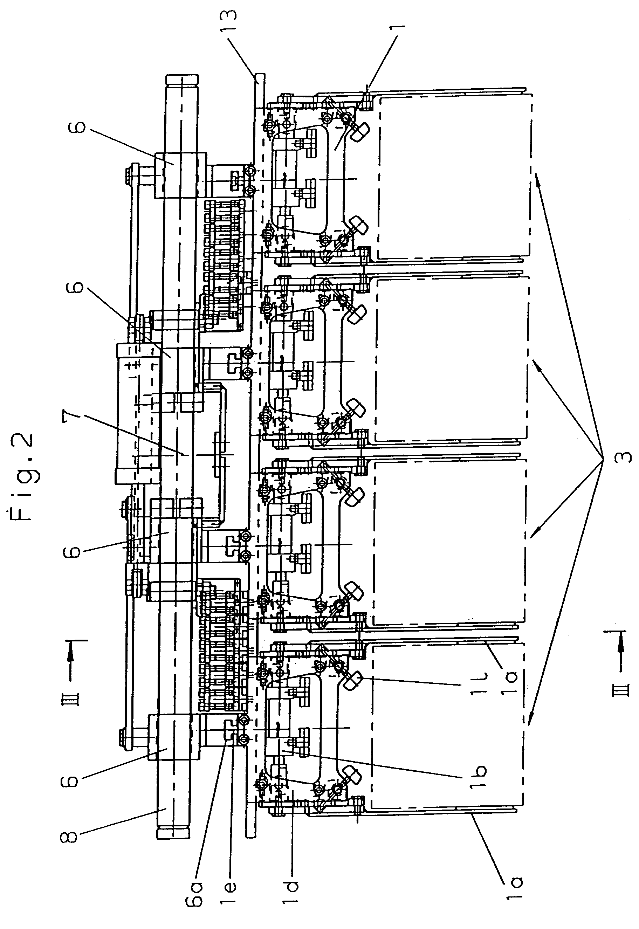

Die in Fig.2 dargestellten Greifer 1 bestehen jeweils aus zwei Greifklappen 1a, die über ein Stellglied 1b betätigbar sind. Eine Änderung des Steinformates macht in vielen Fällen auch ein Auswechseln der Greifklappen 1a notwendig, um den Abstand zwischen zwei Greifklappen 1a an das neue Steinformat anpassen zu können.

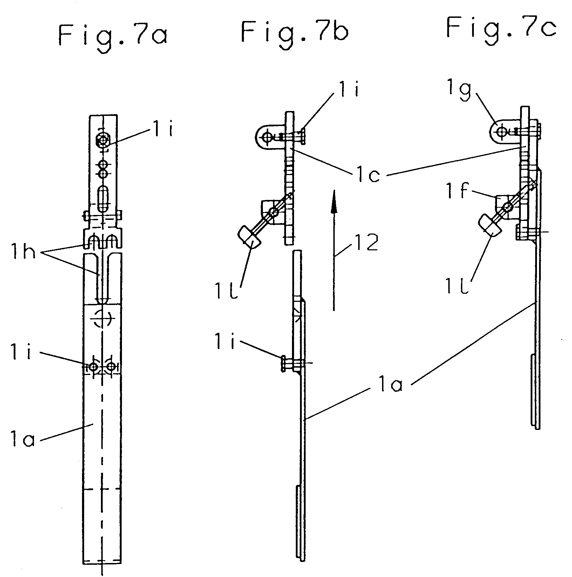

In den Fig.7a, 7b und 7c ist eine besonders einfache Art der Montage der Greifklappen 1a dargestellt.

Die Greifklappen 1a werden in noch näher zu beschreibender Weise an einem Klappenhalteelement 1c befestigt, welches wiederum mit einem Trägerkörper 1d verbunden ist, der das T-förmige Halteelement 1e aufweist, das in der T-Nut 6a der Querträger 6 einführbar ist.

Das Klappenhalteelement 1c ist über ein Zapfenstück 1f schwenkbar am Trägerkörper 1d gehaltert. Das Klappenhalteelement 1c weist ferner einen Flansch 1g auf, der mit dem einen Ende des Stellgliedes 1b zusammenwirkt.

Zur Fixierung der Greifklappe 1a am Klappenhalteelement 1c sind an beiden Teilen als Aussparungen 1h und Bolzen 1i ausgebildete Kopplungselemente sowie eine Halteschraube 1l vorgesehen. Bei der Montage wird die Greifklappe 1a von unten nach oben (Pfeil 12) in das Klappenelement 1c geschoben, wobei die Aussparungen 1h und die Bolzen 1i ineinander greifen und auf diese Weise einen Anschlag nach oben sowie eine seitliche Fixierung gewährleisten. Durch Festdrehen der Halteschraube 1l wird die Greifklappe 1a am Klappenhalteelement 1c fixiert. Die Halteschraube 1l ist zweckmäßigerweise schräg nach oben ausgerichtet, um dem Lösen der Greifklappen 1a nach unten entgegenzuwirken.

Wie insbesondere aus Fig.2 zu erkennen ist, verbleibt oftmals nur ein relativ geringer Abstand zwischen den einzelnen Preßreihen 3. Aus diesem Grund sind die Halteschrauben der beiden Greifklappen 1a eines Greifers 1 innen, d.h. zwischen den beiden Greifklappen 1a angeordnet. In diesem Bereich ist ausreichender Platz vorhanden, um die Halteschrauben 1l zu betätigen. Diese Anordnung hat insbesondere den Vorteil, daß die Halteschrauben nicht nach außen über den Greifer 1a hervorstehen und dadurch den minimalen Abstand zwischen zwei Preßreihen 3 begrenzen.

Die innenliegende Anordnung ermöglicht zudem einen leicht zugängigen und einfachen Wechsel der Greifklappen, so daß die Umrüstzeiten bei einer Änderung des Steinformates verkürzt werden können. Zur einfacheren Bedienung der Halteschrauben können diese mit einem Handrad versehen werden.

Im folgenden wird der Ablauf der Umrüstarbeiten bei Umstellung des Verschiebegreifers auf ein anderes Steinformat beschrieben:

Zunächst werden alle nicht benötigten Greifreihen 2 nach Abkoppeln der Schubstangen 9 von den Querträgern 6 abgezogen.

Ggf. müssen die Greifklappen 1a gemäß dem in den Fig.7a bis 7c dargestellten Schema entsprechend der neuen Steinformatbreite ausgetauscht werden.

Alsdann wird der Verschiebegreifer über die beispielsweise auf einem Transportband liegenden Steinrohlinge gefahren und bis auf die Steinhöhe herabgefahren. Als nächstes wird die erste Verstelleinrichtung für die Greifreihen 2 auf die größte Weite eingestellt, die Schubstangenschellen 9a gelöst, die Greifreihen 2 über den Steinreihen eingerichtet und die Schubstangenschellen wieder festgezogen.

Sodann werden die Anschlagmuttern der Hubbegrenzer 10 an den Längsträgern 8 gelöst, die Querträger über den Steinreihen eingerichtet und die Anschlagmuttern anschließend wieder gegeneinander festgezogen.

Schließlich werden die Steine gegriffen und bis kurz vor der Absetzposition, beispielsweise auf dem Härtewagen, herabgefahren. Mit der zweiten Verstelleinrichtung wird der Abstand zwischen den Preßreihen 3 auf die Maße des Härtewagens verkleinert und die entsprechenden Anschlagmuttern der Hubbegrenzungselemente festgezogen.

Die Kinematik der Schubstangen und Hebelsysteme ergibt für jedes Steinformat exakte Schubwege. Es gibt insbesondere keine gegenseitige Abhängigkeit, wie das beispielsweise bei den bekannten Distanzbolzen in "Kettenfunktion" der Fall ist.

Mit den erfindungsgemäßen Hebelsystemen kann zudem die Anzahl der Stellglieder reduziert und in der Ansteuerung vereinfacht werden.

Für die Umrüstung des Verschiebegreifers sind außer formatabhängigen Greifklappen keine zusätzlichen Kleinteile wie Distanzbolzen erforderlich. Ebenso kann auf spezielle Einstellvorlagen verzichtet werden, weil die individuelle Einstellung direkt an der vorhandenen Steinanordnung optisch erfolgen kann. Die Umrüstzeit verkürzt sich dadurch gegenüber dem herkömmlichen Einstellprinzip wesentlich.

Alle Bereiche, die für die Umrüstung des Verschiebegreifers auf ein neues Steinformat von Bedeutung sind, sind zudem leicht zugänglich. Neben der leichten Zugänglichkeit der Schubstangenschellen sei in diesem Zusammenhang insbesondere die einfache Austauschbarkeit der Greifklappen durch die innenliegenden Halteschrauben nochmals erwähnt.

Nicht zuletzt kann die Bauhöhe des Verschiebegreifers gegenüber den herkömmlichen Verschiebegreifern reduziert werden, so daß auch bei vorhandenen Anlagen keine Einbauprobleme entstehen. Die geringere Bauhöhe ist insbesondere durch die Anordnung der ersten Verschiebeeinrichtung für die Greifreihen bedingt, die zwischen den für die Verschiebung der Preßreihen vorgesehenen Querträgern angeordnet ist.

## Patentansprüche

1. Verschiebegreifer, insbesondere zur stapelweisen Aufnahme einer Vielzahl von Steinrohlingen, enthaltend
a) eine Vielzahl von Greifern (1), die in mehreren Greif- bzw. Preßreihen (2, 3) angeordnet sind,
b) wenigstens eine erste Verstelleinrichtung (4) zum Einstellen des Abstands zwischen einzelnen Greifreihen (2)
c) sowie wenigstens eine zweite Verstelleinrichtung (5; 5') zum Einstellen des Abstandes zwischen einzelnen Preßreihen (3),
dadurch gekennzeichnet, daß die erste Verstelleinrichtung (4) mit den Greifreihen (2) bzw. die zweite Verstelleinrichtung (5; 5') mit den Preßreihen (3) über ein Hebelsystem (4b bis 4m, 5b bis 5h; 5'b bis 5'h) derart gekoppelt ist, daß die Abstände zwischen den Greif- bzw. Preßreihen synchron und stufenlos veränderbar sind.

2. Verschiebegreifer nach Anspruch 1, dadurch gekennzeichnet, daß die erste bzw. zweite Verstelleinrichtung (4, 5; 5') ein erstes bzw. zweites Stellglied (4a, 5a; 5'a) sowie ein mit dem Stellglied zusammenwirkendes erstes bzw. zweites Hebelsystem (4b bis 4m, 5b bis 5h; 5'b bis 5'h) aufweist.

3. Verschiebegreifer nach Anspruch 2, dadurch gekennzeichnet, daß die Stellglieder (4a, 5a) als Zylinder-Kolbenanordnung ausgebildet sind.

4. Verschiebegreifer nach Anspruch 1, dadurch gekennzeichnet, daß alle Greifer (1) einer Preßreihe (3) an einem Querträger (6) verschiebbar angeordnet sind.

5. Verschiebegreifer nach Anspruch 4, dadurch gekennzeichnet, daß die Querträger (6) zur Führung der Greifer (1) eine Aussparung, insbesondere eine T-Nut (6a) aufweisen.

6. Verschiebegreifer nach Anspruch 4, dadurch gekennzeichnet, daß die Querträger (6) zur Veränderung des Abstands der Preßreihen (3) an wenigstens zwei Längsträgern (8) verschiebbar angeordnet sind.

7. Verschiebegreifer nach Anspruch 4, dadurch gekennzeichnet, daß die Greifer (1) einer Greifreihe (2) über ein Führungselement (13) miteinander verbunden sind.

8. Verschiebegreifer nach Anspruch 2, dadurch gekennzeichnet, daß jede Greifreihe (2) über wenigstens eine Schubstange (9) mit dem ersten Hebelsystem verbunden ist.

9. Verschiebegreifer nach Anspruch 2, dadurch gekennzeichnet, daß die erste bzw. zweite Verstelleinrichtung (4, 5; 5') über das erste bzw. zweite Hebelsystem mit den Greifreihen (2) bzw. den Preßreihen (3) derart gekoppelt ist, daß die Abstände benachbarter Greifreihen bzw. Preßreihen auch während der Abstandseinstellung gleich groß sind.

10. Verschiebegreifer nach Anspruch 1, dadurch gekennzeichnet, daß jeder Greifer (1) zwei gegenüberliegende Greifklappen (1a) aufweist, die über ein Stellglied (1b) betätigbar sind.

11. Verschiebegreifer nach Anspruch 10, dadurch gekennzeichnet, daß die Greifklappen (1a) auswechselbar am Greifer mittels je einer Halteschraube gehaltert sind, wobei die Halteschrauben in einem Bereich zwischen den Greifklappen (1a) angeordnet sind.

12. Verschiebegreifer nach Anspruch 1, dadurch gekennzeichnet, daß für den maximalen und minimalen Abstand der Greifreihen (2) bzw. Preßreihen (3) Hubbegrenzungselemente (10, 11) für die Verstelleinrichtungen (4, 5; 5') vorgesehen sind.
